# EUROPEAN PATENT SPECIFICATION

(11) **EP 3 447 270 B1**
(45) Date of publication and mention of the grant of the patent: **16.12.2020**
(21) Application number: 18187719.2
(22) Date of filing: 07.08.2018
(51) Int. Cl.: F02D 37/02, F02D 41/00, F02D 41/14, F02P 5/152, F02P 5/145, F02D 35/02, F02D 41/02

(54) **INTERNAL COMBUSTION ENGINE DRIVE CONTROL APPARATUS AND INTERNAL COMBUSTION ENGINE DRIVE CONTROL METHOD**
VERBRENNUNGSMOTORANTRIEBSSTEUERUNGSVORRICHTUNG UND VERBRENNUNGSMOTORANTRIEBSSTEUERUNGSVERFAHREN
APPAREIL DE COMMANDE D'ENTRAÎNEMENT D'UN MOTEUR À COMBUSTION INTERNE ET PROCÉDÉ DE COMMANDE D'ENTRAÎNEMENT D'UN MOTEUR À COMBUSTION INTERNE

(30) Priority: 23.08.2017 JP 2017160144
(43) Date of publication of application: 27.02.2019
(73) Proprietor: Bosch Corporation, Yokohama-Shi Kanagawa 2248501 (JP)
(72) Inventor: Hoshi, Masaru, Yokohama-shi, Kanagawa 2248501 (JP); Sanada, Keisho, Yokohama-shi, Kanagawa 2248501 (JP); Morita, Hiroki, Yokohama-shi, Kanagawa 2248501 (JP)
(74) Representative: Bee, Joachim

(56) References cited:
- EP-A2- 2 366 879
- WO-A1-2011/162700
- JP-A- 2014 141 943

## Description

### BACKGROUND OF THE INVENTION

### 1. Field of the Invention

The invention relates to an internal combustion engine drive control apparatus and an internal combustion engine drive control method and, in particular, is favorably applied to an internal combustion engine drive control apparatus and an internal combustion engine drive control method, each of which meets requirements of emissions control and lowers an exhaust temperature.

### 2. Description of the Related Art

An internal combustion engine is required to meet requirements of various emissions controls and produce exhaust gas with fewer pollutants. Thus, in order to reduce unburned hydrocarbons (HC), carbon monoxide (CO), and nitrogen oxides (NOx) contained in the exhaust gas, provision of a three-way exhaust gas purifier in the internal combustion engine has been well known.

A catalyst used in such an exhaust gas purifier is relatively vulnerable to a high temperature, and long exposure to the high temperature leads to damage of the catalyst. Thus, a certain measure is generally taken for the internal combustion engine provided with the exhaust gas purifier, so as to maintain a temperature of the exhaust gas to a lower temperature than a temperature at which the catalyst is damaged.

As the measure of lowering the temperature of the exhaust gas (an exhaust temperature), a method of lowering the exhaust temperature by bringing an air-fuel ratio into a fuel excessive (rich) state in the internal combustion engine using gasoline is available, for example.

However, because combustion at the rich air-fuel ratio inevitably leads to an increase in emission of toxic substances such as unburned hydrocarbons (HC) and carbon monoxide (CO), it temporarily deteriorates an original operation and original functions of the exhaust gas purifier. In addition, such a situation is assumed where requirements of real driving emissions (RDE) control, which is scheduled to be adopted in each country, cannot be met.

Instead of lowering the exhaust temperature at the rich air-fuel ratio as described above, a measure of using an exhaust gas recirculation (EGR) system can be taken (for example, see JP-A-2011-190782 and the like).

For example, in the measure disclosed in JP-A-2011-190782, the exhaust temperature is modeled and calculated from various physical quantities, calculation data, and the like, an exhaust device temperature is calculated on the basis of the modeled exhaust temperature, and the rich air-fuel ratio and an external EGR rate are regulated such that this exhaust device temperature becomes equal to or lower than an upper limit temperature. The various physical quantities include a speed, charging efficiency, ignition timing, the external EGR rate, and the like of the internal combustion engine and are used to control an operation of the internal combustion engine.

Moreover, JP 2014 141943 A discloses a method of suppressing knocking of an internal combustion engine.

### SUMMARY OF THE INVENTION

However, the above-described method using the external EGR system has the following problems.

In particular, in the case where use environment and a use condition of an automobile or the like are significantly changed over time, it is difficult to constantly model a temperature of an exhaust system with a high degree of accuracy by the method of controlling the EGR rate on the basis of the modeled exhaust device temperature such that the exhaust temperature and a catalyst temperature become equal to or lower than a damaging temperature.

When knocking occurs due to a high intake temperature, adhesion of deposits to a combustion chamber, or the like, the ignition timing is retarded by knocking control to prevent damage to the internal combustion engine. In this case, the exhaust temperature, in turn, the catalyst temperature possibly exceeds the damaging temperature at a fixed EGR rate that is defined under a precondition that the ignition timing is set to prescribed timing.

The invention has been made in view of the above circumstances and therefore provides an internal combustion engine drive control apparatus with the features of claim 1 and an internal combustion engine drive control method with the features of claim 4. The internal combustion engine drive control apparatus and the internal combustion engine drive control method are capable of reliably maintaining a catalyst temperature to be equal to or lower than a damaging temperature in accordance with an operation state of an internal combustion engine.

According to the invention, the ignition timing retardation amount is taken into consideration for setting of the EGR rate. Thus, differing from the related art, an increase in the exhaust temperature can reliably be reduced even when the ignition timing is retarded. Therefore, such effects can be exerted that a temperature of a catalyst used in an exhaust gas purifier can reliably be maintained to be equal to or lower than a damaging temperature and that an internal combustion engine with improved reliability and safety can be provided.

### BRIEF DESCRIPTION OF THE DRAWINGS

Fig. 1 is a configuration view illustrating a configuration example of an exhaust gas recirculation system provided in an internal combustion engine to which an internal combustion engine drive control method in an embodiment of the invention is applied;
Fig. 2 is a flowchart illustrating a procedure of internal combustion engine drive control processing in a first example of the invention;
Fig. 3 is a functional block diagram in which functions required for an electronic control unit to execute the internal combustion engine drive control processing in the first example of the invention are illustrated by functional blocks;
Fig. 4 is a flowchart illustrating a procedure of internal combustion engine drive control processing in a second example of the invention;
Fig. 5 is a functional block diagram in which functions required for the electronic control unit to execute the internal combustion engine drive control processing in the second example of the invention are illustrated by functional blocks;
Figs. 6A and 6B are characteristic diagrams illustrating change examples of an exhaust temperature and a torque fluctuation with respect to a change in an EGR rate, in which Fig. 6A is a characteristic diagram illustrating the change example of the exhaust temperature with respect to the change in the EGR rate and Fig. 6B is a characteristic diagram illustrating the change example of the torque fluctuation with respect to the change in the EGR rate; and
Figs. 7A and 7B are characteristic diagrams illustrating change examples of the exhaust temperature and the EGR rate with respect to a retardation change in ignition timing, in which Fig. 7A is a characteristic diagram illustrating the change example of the exhaust temperature with respect to the retardation change in the ignition timing and Fig. 7B is a characteristic diagram illustrating the change example of the EGR rate with respect to the retardation change in the ignition timing.

### DETAILED DESCRIPTION OF THE PREFERRED EMBODIMENT

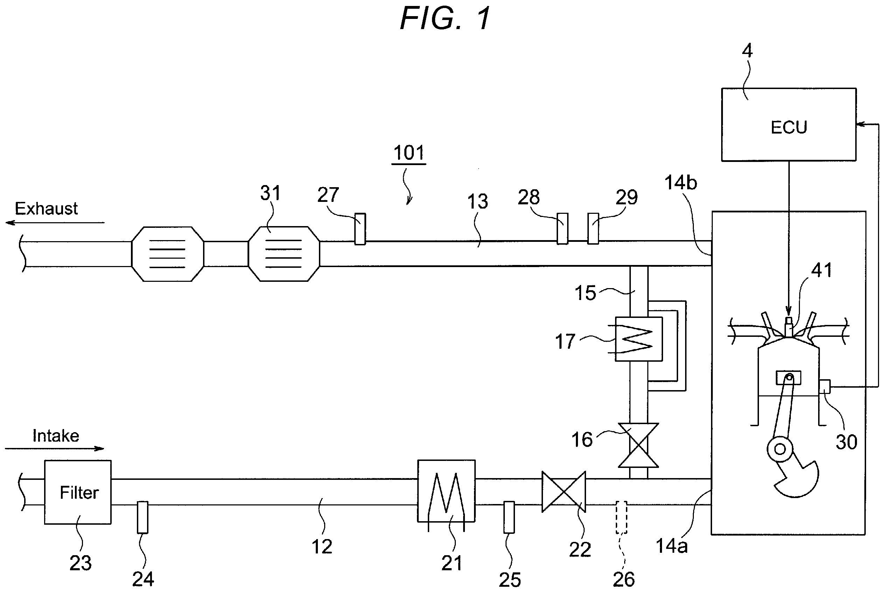

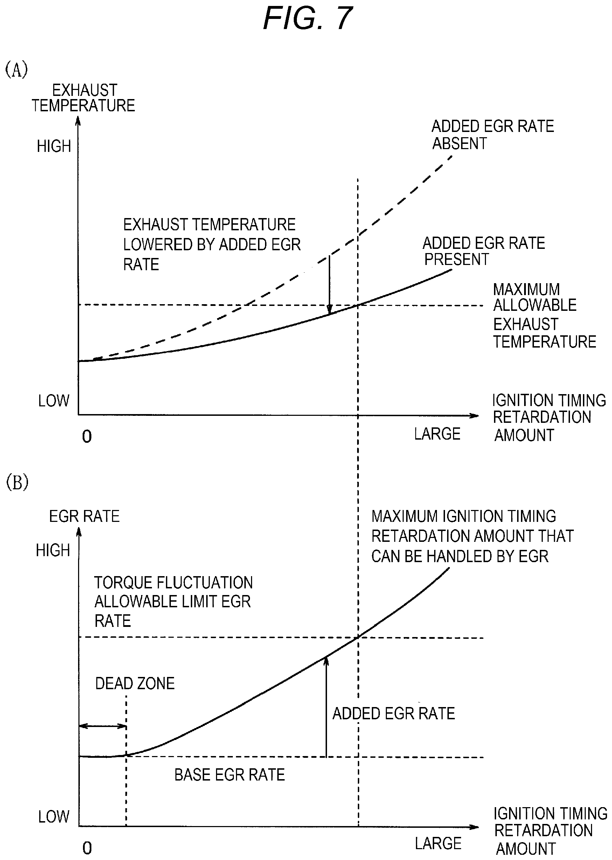

A description will hereinafter be made on this embodiment with reference to Fig. 1 to Figs. 7A and 7B.

First, a description will be made on a configuration example of an exhaust gas recirculation system provided in an internal combustion engine to which an internal combustion engine drive control method in the embodiment of the invention is applied with reference to Fig. 1.

In the embodiment of the invention, the internal combustion engine is a gasoline engine (hereinafter referred to as an "engine") 3, for example.

Fig. 1 illustrates a configuration example of an exhaust gas recirculation system 101 provided in the engine 3. Hereinafter, a configuration and the like of the exhaust gas recirculation system 101 will be described with reference to Fig. 1.

An intake pipe 12, through which air required for fuel combustion is suctioned, is connected to an intake manifold 14a of this engine 3. An exhaust pipe 13, through which exhaust gas is discharged, is connected to an exhaust manifold 14b of the engine 3.

A communication path 15 that communicates between the exhaust pipe 13 and the intake pipe 12 is provided at appropriate positions in the exhaust pipe 13 and the intake pipe 12. In an order from the exhaust pipe 13 side, an EGR cooler 17 and an EGR valve 16 are disposed in an intermediate portion of this communication path 15. The EGR cooler 17 cools the passing exhaust gas. The EGR valve 16 regulates a communication state of the communication path 15, in other words, a recirculation amount of the exhaust gas.

An intercooler 21 that cools the intake air is provided at an appropriate position in the intake pipe 12.

Between this intercooler 21 and the communication path 15, an intake throttle valve 22 that regulates an intake air amount is provided.

A filter 23 that purifies the intake air is provided in an upstream side of the intake pipe 12. On a downstream side of the filter 23, an air mass sensor 24 is provided to detect the intake air amount that flows into the intake pipe 12 via the filter 23.

In the embodiment of the invention, a detection value of the air mass sensor 24 is used to calculate charging efficiency. However, the detection value of the air mass sensor 24 does not always have to be used. Instead of the air mass sensor 24, it may be configured to use an intake pressure sensor 26.

The intake pipe 12 is further provided with an intake temperature sensor 25 that detects a temperature of the intake air for the engine 3. In this configuration example, the intake temperature sensor 25 is provided between the intercooler 21 and the intake throttle valve 22. However, the intake temperature sensor 25 may be provided on an upstream side of the intake throttle valve 22.

Meanwhile, in an order from a downstream side of the exhaust pipe 13, a λ sensor 27, an exhaust pressure sensor 28 that detects an exhaust pressure, and an exhaust temperature sensor 29 that detects a temperature of the exhaust gas are provided at appropriate positions in the exhaust pipe 13.

Furthermore, a knock sensor 30 that detects knocking is attached to the engine 3. Detection of knocking by the knock sensor 30 is required for execution of knocking control in which ignition timing of an ignition plug 41 is retarded for a purpose of preventing damage to the engine 3.

In the embodiment of the invention, a three-way catalyst 31 is provided on a downstream side of the λ sensor 27. This three-way catalyst 31 is merely one example, and the invention does not have to be limited thereto. Needless to say, another catalyst or the like may be used.

An electronic control unit 4 receives detection signals of the air mass sensor 24, the intake temperature sensor 25, the intake pressure sensor 26, the λ sensor 27, the exhaust pressure sensor 28, the exhaust temperature sensor 29, and the knock sensor 30 described above. These detection signals are used for fuel injection control processing, EGR control, internal combustion engine drive control processing in examples of the invention, which will be described below, and the like.

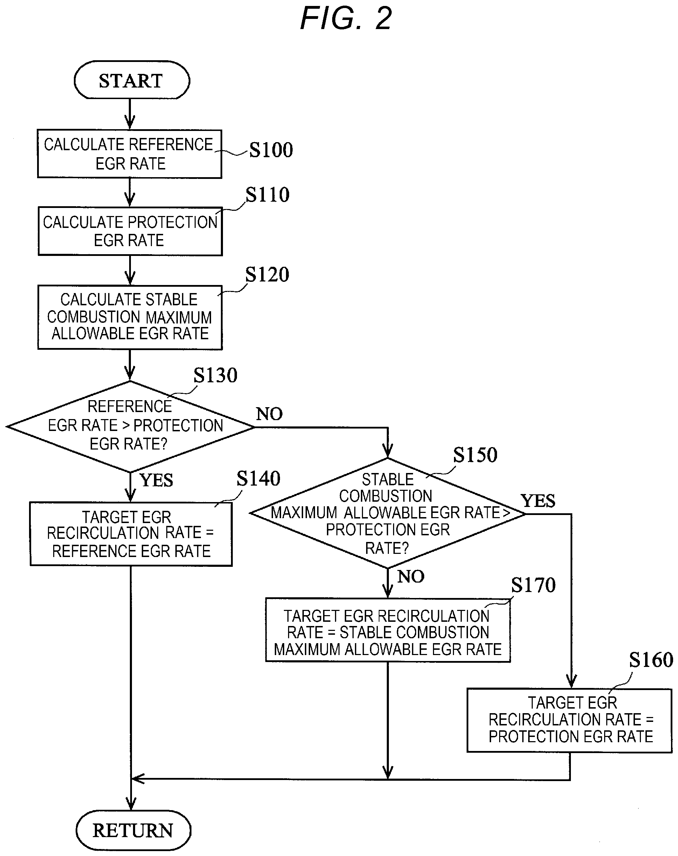

Next, a description will be made on a first example of the internal combustion engine drive control processing that is executed by the electronic control unit 4 with reference to Fig. 2, Fig. 3, Figs. 6A and 6B, and Figs. 7A and 7B.

First, an overview of the internal combustion engine drive control processing in the first example will be described.

In this internal combustion engine drive control processing, a reference EGR rate and a protection EGR rate are calculated, and higher one of the reference EGR rate and the protection EGR rate under a specified condition is used for the EGR control, so as to be able to suppress an increase in an exhaust temperature. The reference EGR rate corresponds to an EGR rate in the normal EGR control. The protection EGR rate is an EGR rate that is defined from a perspective of protection of the catalyst and the like in an exhaust gas purifier.

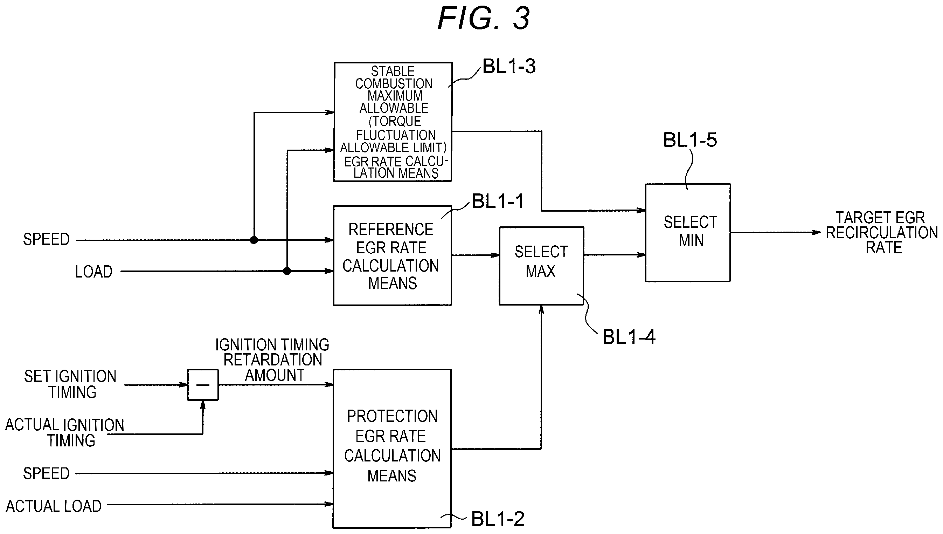

A description will be made on a specific procedure of the internal combustion engine drive control processing that is executed by the electronic control unit 4 with reference to a flowchart in Fig. 2 and a functional block diagram in Fig. 3. In the functional block diagram illustrated in Fig. 3, main blocks are denoted by reference signs (BL1-1 to BL1-5) . In the description of the processing procedure in Fig. 2, the blocks that correspond to the processing are appropriately referred by the reference signs thereof.

Once the processing by the electronic control unit 4 is initiated, the reference EGR rate is first calculated (see step S100 in Fig. 2 and BL1-1 in Fig. 3).

The calculation of this reference EGR rate is basically the same as calculation processing in the conventional EGR control processing. That is, the reference EGR rate is defined on the basis of an engine speed and a load.

More specifically, as the above-described "load" that is used for the calculation of the reference EGR rate, target charging efficiency, the charging efficiency, target torque, actual torque, or the like is suitable, for example, and any of these is arbitrarily used. In addition, the load does not always have to be limited thereto, and another physical quantity that is equivalent to any of those may be used.

A reference EGR rate map is used for the calculation of the reference EGR rate.

More specifically, the reference EGR rate map is configured that the reference EGR rate for various combinations of the engine speed and the load can be retrieved by inputting the engine speed and the load. This reference EGR rate map is set in advance and stored in an appropriate storage area of the electronic control unit 4 for use, for example.

The reference EGR rate for the various combinations of the engine speed and the load is defined on the basis of a test result, a simulation result, or the like with a specification and the like of the individual engine 3 being taken into consideration.

Next, the protection EGR rate is calculated (see step S110 in Fig. 2 and BL1-2 in Fig. 3).

The protection EGR rate is calculated on the basis of an ignition timing retardation amount, the engine speed, and the actual load (see Fig. 3).

This protection EGR rate is an EGR rate used to set the exhaust temperature to a temperature at which exhaust system components are not damaged and which falls within an allowable range as a temperature of the exhaust system components (an allowable limit temperature range). This protection EGR rate is uniquely defined by using the ignition timing retardation amount, the engine speed, and the actual load. Here, the exhaust system components mean devices in a so-called exhaust system and the exhaust gas purifier (the catalyst and the like) . Representative examples of the devices in the exhaust system are the exhaust manifold 14b and a turbocharger.

Similar to the calculation of the reference EGR rate, a protection EGR rate map is used for the calculation of the protection EGR rate.

The protection EGR rate map is configured that the protection EGR rate for various combinations of the ignition timing retardation amount, the engine speed, and the actual load can be retrieved by inputting the ignition timing retardation amount, the engine speed, and the actual load. This protection EGR rate map is set in advance and stored in the appropriate storage area of the electronic control unit 4 for use, for example.

The ignition timing retardation amount is calculated as a value that is acquired by subtracting actual ignition timing from set ignition timing (see Fig. 3).

The set ignition timing is defined on the basis of an operation state and the like of the engine 3 in normal engine control processing that is separately executed.

The actual ignition timing is grasped and acquired by the electronic control unit 4 in the engine control processing that is executed in a similar manner to the related art. Accordingly, the actual ignition timing, which is already acquired, can be used for the calculation of the protection EGR rate, and no special processing is required for the acquisition of the actual ignition timing.

More specifically, a representative example of the actual load is the actual torque.

For example, the actual torque is calculated when the charging efficiency of the engine 3 is calculated on the basis of the intake air amount acquired by the air mass sensor 24 and a specified calculation is performed on the basis of this charging efficiency.

Note that the calculation of the actual torque itself is not unique to the invention but has conventionally been performed in the normal engine control processing. Thus, there is no need to newly perform the calculation for the acquisition of the protection EGR rate, and the actual torque, which is already acquired, can be used.

In addition, the actual torque is provided as the example that corresponds to the actual load. However, the actual load does not always have to be limited thereto, and another physical quantity that is equivalent to the actual torque may be used.

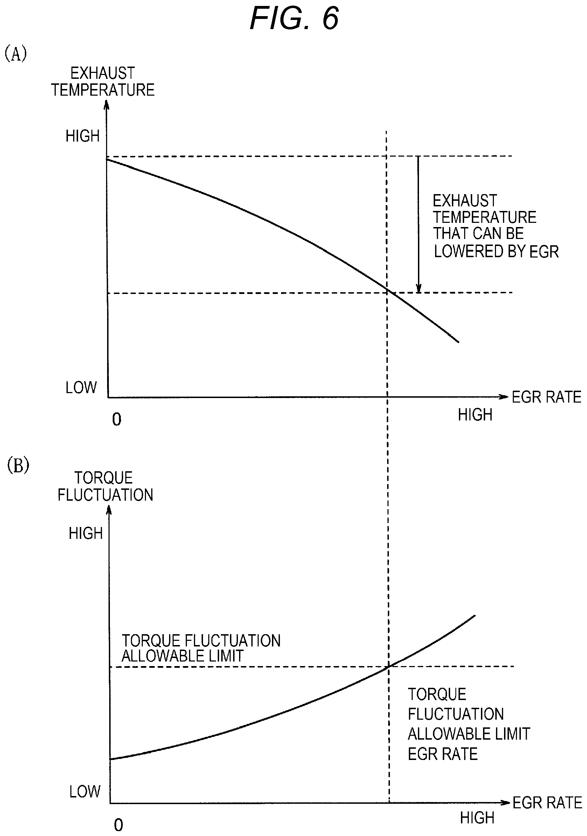

Herein, a description will be made on a change in the exhaust temperature with respect to a change in the EGR rate and a degree of a torque fluctuation with respect to the change in the EGR rate with reference to Figs. 6A and 6B. A description will also be made on a purpose of taking the ignition timing retardation amount into consideration for setting of the EGR rate with reference to Figs. 7A and 7B.

First, Fig. 6A has a characteristic line that represents a change example of the exhaust temperature with respect to the change in the EGR rate, and Fig. 6B has a characteristic line that represents a change example of the torque fluctuation with respect to the change in the EGR rate.

Normally, the exhaust temperature tends to be lowered as the EGR rate is increased (see Fig. 6A).

Meanwhile, the torque fluctuation tends to be increased as the EGR rate is increased (see Fig. 6B).

The increased torque fluctuation means deterioration of combustion stability. Thus, in order to prevent deterioration of various characteristics required for the entire engine, an upper limit is naturally set for a maximum value of the possibly set EGR rate.

An allowable limit value of the torque fluctuation (a torque fluctuation allowable limit) differs by the specification and the like of the entire engine. However, the upper limit value of the EGR rate is always set to a value at which this torque fluctuation permissible limit is derived (see Fig. 6B).

Accordingly, while the exhaust temperature can be lowered with the increase in the EGR rate as described above, a range of the exhaust temperature within which the exhaust temperature can be lowered by changing the EGR rate is set between a maximum value thereof and a value at which the upper limit value of the EGR rate is defined by the torque fluctuation allowable limit (see Fig. 6A).

Next, Figs. 7A and 7B will be described.

First, in Fig. 7B, a base EGR rate corresponds to the reference EGR rate described above. Because the base EGR rate (the reference EGR rate) is uniquely defined by using the engine speed and the load, the base EGR rate (the reference EGR rate) remains constant with respect to a change in the ignition timing retardation amount.

Meanwhile, the exhaust temperature tends to be increased along with an increase in the ignition timing retardation amount (see Fig. 7A).

Accordingly, when the ignition timing is retarded, the exhaust temperature cannot be lowered by the EGR control using the reference EGR rate only. Thus, it is necessary to increase the EGR rate in accordance with the ignition timing retardation amount, so as to lower the exhaust temperature (see Fig. 6A).

In order to compensate for the reference EGR rate that is insufficient from the perspective of lowering the exhaust temperature as described above, the protection EGR rate is set by adding an EGR rate increase amount that corresponds to the ignition timing retardation amount to the reference EGR rate (see Fig. 7B) . The EGR rate that is increased from the reference EGR rate in conjunction with the increase in the ignition timing retardation amount is defined as an "added EGR rate" (see Fig. 7B) .

Although the exhaust temperature is increased along with the increase in the ignition timing retardation amount, the increase in the exhaust temperature is offset by increasing the EGR rate in conjunction with the increase in the ignition timing retardation amount. Consequently, the exhaust temperature can be expected to be lowered by the added EGR rate within a range that does not exceed a certain ignition timing retardation amount, that is, within a range that the EGR rate does not exceed the EGR rate on the torque fluctuation allowable limit (see Fig. 7A) .

The description returns to the processing procedure in Fig. 2.

Following the processing in above-described step S110, stable combustion maximum allowable (the torque fluctuation allowable limit) EGR rate is calculated (see step S120 in Fig. 2 and BL1-3 in Fig. 3).

The stable combustion maximum allowable EGR rate is an upper limit value of the EGR rate that can be set within an allowable range of the operation state of the engine 3.

This stable combustion maximum allowable EGR rate is defined in advance by mainly considering the change in the exhaust temperature with respect to the change in the EGR rate and the degree of the torque fluctuation with respect to the change in the EGR rate.

More specifically, the stable combustion maximum allowable EGR rate is defined with the value of the EGR rate on the torque fluctuation allowable limit (see Fig. 6B) being an upper limit.

Similar to the calculation of the above reference EGR rate, a stable combustion maximum allowable EGR rate map is used for the calculation of the stable combustion maximum allowable EGR rate. The stable combustion maximum allowable EGR rate map is set in advance and stored in the appropriate storage area of the electronic control unit 4.

Similar to the above reference EGR rate map, this stable combustion maximum allowable EGR rate map is configured that the stable combustion maximum allowable EGR rate for various combinations of the engine speed and the load can be retrieved by inputting the engine speed and the load.

This stable combustion maximum allowable EGR rate map is set in advance and stored in the appropriate storage area of the electronic control unit 4 for use, for example.

Next, it is determined whether the reference EGR rate is higher than the protection EGR rate (see step S130 in Fig. 2).

If it is determined that the reference EGR rate is higher than the protection EGR rate (if YES) in step S130, the processing proceeds to step S140, which will be described next. On the other hand, if it is determined that the reference EGR rate is not higher than the protection EGR rate (if NO), the processing proceeds to step S150, which will be described below (see BL1-4 in Fig. 3).

The functional block BL1-4 described as "select MAX" in Fig. 3 means to have a function of selecting higher one of the reference EGR rate and the protection EGR rate.

In step S140, the reference EGR rate is selected as a target EGR recirculation rate and used for the EGR control (see BL1-4 and BL1-5 in Fig. 3). Here, the reference EGR rate is always equal to or lower than the stable combustion maximum allowable EGR rate. Thus, in the case where it is determined that the reference EGR rate is higher than the protection EGR rate, the reference EGR rate is selected as the target EGR recirculation rate and used for the EGR control.

Meanwhile, in step S150, it is determined whether the stable combustion maximum allowable EGR rate is higher than the protection EGR rate.

If it is determined that the stable combustion maximum allowable EGR rate is higher than the protection EGR rate (if YES) in step S150, the protection EGR rate is selected as the target EGR recirculation rate (see step S160 in Fig. 2 and BL1-5 in Fig. 3) and used for the EGR control.

Accordingly, the EGR control in this case differs from the EGR control that is based on the reference EGR rate only, and is executed on the basis of the protection EGR rate that is acquired by adding the EGR rate increase amount corresponding to the ignition timing retardation amount to the reference EGR rate. Thus, as described above, the exhaust temperature is appropriately lowered (see Figs. 7A and 7B).

On the other hand, if it is determined that the stable combustion maximum allowable EGR rate is not higher than the protection EGR rate (if NO) in step S150, the stable combustion maximum allowable EGR rate is selected as the target EGR recirculation rate (see step S170 in Fig. 2 and BL1-5 in Fig. 3) and used for the EGR control. In this way, the torque fluctuation does not exceed the torque fluctuation allowable limit, and the safe operation state of the engine 3 is secured.

The functional block BL1-5 that is described as "select MIN" in Fig. 3 means to have a function of selecting lower one of two input signals.

In addition, when the protection EGR rate is calculated, in addition to the ignition timing retardation amount, the engine speed, and the actual load described above, it may be suited to take an external temperature and, for example, data on intake system regulation means that regulates opening timing of an intake valve into consideration.

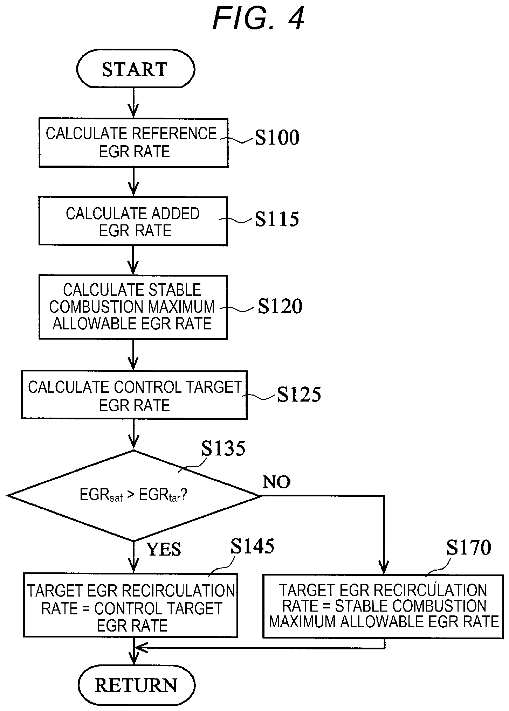

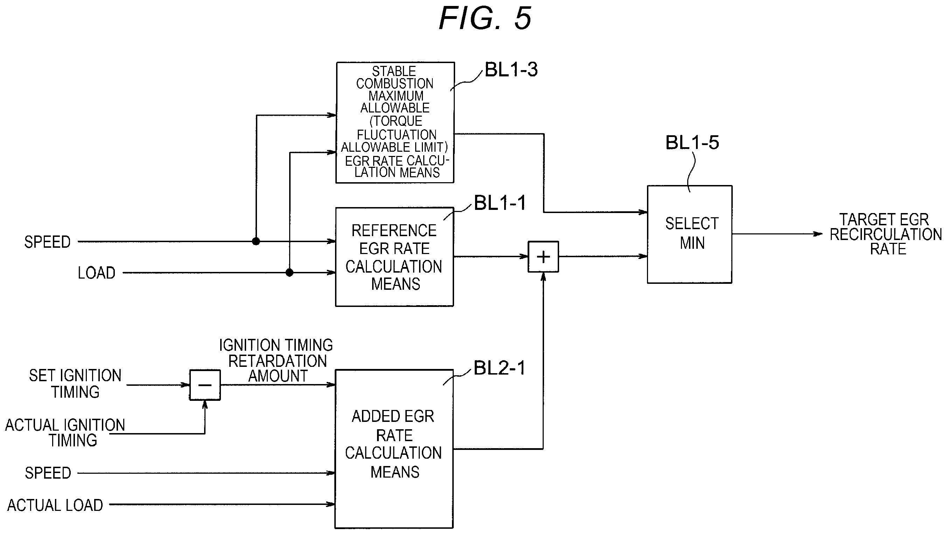

Next, a description will be made on a second configuration example with reference to Fig. 4 and Fig. 5.

Note that the same components as the components in the first configuration example will be denoted by the same reference signs, a detailed description thereon will not be made, and the description will hereinafter be centered on different points.

First, an overview of internal combustion engine drive control processing in a second example will be described.

This internal combustion engine drive control processing has a purpose of maintaining the temperatures of the catalyst and the like in the exhaust gas purifier to be equal to or lower than a damaging temperature and successively corrects the EGR rate in the conventional EGR control processing in accordance with the ignition timing retardation amount, so as to be able to prevent the unnecessary increase in the exhaust temperature and reliably maintain the temperatures of the catalyst and the like to be equal to or lower than the damaging temperature. The conventional EGR control processing is executed under a precondition that the ignition timing is set at a target value.

A description will be made on a specific procedure of the internal combustion engine drive control processing that is executed by the electronic control unit 4 with reference to a flowchart in Fig. 4 and a functional block diagram in Fig. 5. In the functional block diagram illustrated in Fig. 5, main blocks are denoted by reference signs (BL1-1, BL1-3, BL1-5, and BL2-1) . In the description of the processing procedure in Fig. 4, the blocks that correspond to the processing are appropriately referred by the reference signs thereof.

First, the calculation of the reference EGR rate that is initially performed by the electronic control unit 4 (see step S100 in Fig. 4 and BL1-1 in Fig. 5) has the same processing content as that in the above first configuration example.

Next, the added EGR rate is calculated (see step S115 in Fig. 4 and BL2-1 in Fig. 5).

The added EGR rate is added to the above reference EGR rate, and the acquired value is used as the target EGR recirculation rate under a specified condition, which will be described below (see Fig. 5).

As described in the above first configuration example, the reference EGR rate is uniquely defined by using the engine speed and the load. As it has already been described, when the ignition timing is retarded, the exhaust temperature cannot be lowered by the EGR control that is based on the reference EGR rate only.

When the ignition timing is retarded, the added EGR rate compensates for the EGR rate that is insufficient by the reference EGR rate only, so as to be able to further reliably suppress the increase in the exhaust temperature. As described above by using Fig. 7B, such an added EGR rate is the EGR rate increase amount that is added to the reference EGR rate and corresponds to the ignition timing retardation amount.

The added EGR rate is calculated on the basis of the ignition timing retardation amount, the engine speed, and the actual load.

Similar to the calculation of the reference EGR rate, an added EGR rate map is used for the calculation of the added EGR rate.

The added EGR rate map is configured that the added EGR rate for various combinations of the ignition timing retardation amount, the engine speed, and the actual load can be retrieved by inputting the ignition timing retardation amount, the engine speed, and the actual load. This added EGR rate map is set in advance and stored in the appropriate storage area of the electronic control unit 4 for use, for example.

The ignition timing retardation amount is calculated as the value that is acquired by subtracting the actual ignition timing from the set ignition timing (see Fig. 5).

Note that the set ignition timing and the actual ignition timing are as described in the above first configuration example, and thus the detailed description thereon will not be repeated.

Next, the stable combustion maximum allowable (the torque fluctuation allowable limit) EGR rate is calculated (see step S120 in Fig. 4 and BL2-1 in Fig. 5).

Because the calculation processing of this stable combustion maximum allowable EGR rate is as described in the above first configuration example, the detailed description thereon will not be repeated.

Next, a control target EGR rate is calculated (see step S125 in Fig. 4).

More specifically, the control target EGR rate is calculated a result of the addition of the reference EGR rate and the added EGR rate (see Fig. 5).

Next, it is determined whether the stable combustion maximum allowable EGR rate (EGR_{saf}) is higher than the control target EGR rate (EGRtar) (see step S135 in Fig. 4).

If it is determined that the stable combustion maximum allowable EGR rate (EGR_{saf}) is higher than the control target EGR rate (EGRtar) (if YES) in step S135, the control target EGR rate (EGRtar) is selected as the target EGR recirculation rate (see step S145 in Fig. 4 and BL1-5 in Fig. 5) and used for the EGR control.

Accordingly, the EGR control in this case differs from the EGR control that is based on the reference EGR rate only, and is executed on the basis of the control target EGR rate that is acquired by adding the EGR rate increase amount corresponding to the ignition timing retardation amount to the reference EGR rate. Thus, as described above, the exhaust temperature is appropriately lowered (see Figs. 7A and 7B).

On the other hand, if it is determined that the stable combustion maximum allowable EGR rate (EGR_{saf}) is not higher than the control target EGR rate (EGRtar) (if NO) in step S135, it means that the control target EGR rate (EGRtar) exceeds the stable combustion maximum allowable EGR rate (EGR_{saf}). Thus, the stable combustion maximum allowable EGR rate (EGR_{saf}) is selected as the target EGR recirculation rate (see step S170 in Fig. 4 and BL1-5 in Fig. 5) and used for the EGR control. In this way, the safe operation state of the engine 3 is secured.

When the added EGR rate is calculated, in addition to the ignition timing retardation amount, the engine speed, and the actual load as described above, it may be suited to take the external temperature and, for example, the data on the intake system regulation means that regulates the opening timing of the intake valve into consideration.

The invention can be applied to the internal combustion engine for which it is desired to reliably maintain the catalyst temperature to be equal to or lower than the damaging temperature.

## Claims

1. An internal combustion engine drive control apparatus which includes an exhaust gas recirculation system (101) recirculating some of exhaust gas of an internal combustion engine (3) to an intake side of the internal combustion engine (3) and in which an electronic control unit (4) controls an operation of the exhaust gas recirculation system (101) and an operation of the internal combustion engine (3), wherein
the electronic control unit (4) is designed to
calculate a reference EGR rate on the basis of a speed and a load of the internal combustion engine (3) using a reference EGR rate map,
calculate a protection EGR rate on the basis of the speed, the load, and an ignition timing retardation amount of the internal combustion engine (3) using a protection EGR rate map, and,
when the reference EGR rate is higher than the protection EGR rate, execute the EGR control by using the reference EGR rate as a target EGR recirculation rate .

2. The internal combustion engine drive control apparatus according to claim 1, wherein
the electronic control unit (4) is further designed to
calculate a stable combustion maximum allowable EGR rate as a maximum value of the EGR rate at which stable combustion can be secured in the internal combustion engine (3) on the basis of the speed and charging efficiency of the internal combustion engine (3) using a stable combustion maximum allowable EGR rate map, and,
when the reference EGR rate is not higher than the protection EGR rate and when the protection EGR rate is below the stable combustion maximum allowable EGR rate, execute the EGR control by using the protection EGR rate as the target EGR recirculation rate.

3. The internal combustion engine drive control apparatus according to claim 2, wherein, when the reference EGR rate is not higher than the protection EGR rate and when the stable combustion maximum allowable EGR rate is not higher than the protection EGR rate, the electronic control unit (4) is further designed to execute the EGR control by using the stable combustion maximum allowable EGR rate as the target EGR recirculation rate.

4. An internal combustion engine drive control method including an exhaust gas recirculation system (101) recirculating some of exhaust gas of an internal combustion engine (3) to an intake side of the internal combustion engine (3), the internal combustion engine drive control method comprising:
a first step of calculating a reference EGR rate on the basis of a speed and a load of the internal combustion engine (3) using a reference EGR rate map;
a second step of calculating a protection EGR rate on the basis of the speed, the load, and an ignition timing retardation amount of the internal combustion engine (3) using a protection EGR rate map,; and
a third step of determining whether the reference EGR rate is higher than the protection EGR rate;
wherein, when the reference EGR rate is higher than the protection EGR rate, the reference EGR rate is used as a target EGR recirculation rate while controlling an operation of the exhaust gas recirculation system (101) and an operation of the internal combustion engine (3) .

## Patentansprüche

1. Verbrennungsmotorantriebssteuerungsvorrichtung, die ein Abgasrückführungssystem (101) enthält, das einen Teil des Abgases eines Verbrennungsmotors (3) an eine Ansaugseite des Verbrennungsmotors (3) zurückführt, und in der ein elektronisches Steuergerät (4) einen Betrieb des Abgasrückführungssystems (101) und einen Betrieb des Verbrennungsmotors (3) steuert, wobei
das elektronische Steuergerät (4) dazu ausgelegt ist,
eine Referenz-AGR-Rate basierend auf einer Drehzahl und einer Last des Verbrennungsmotors (3) unter Verwendung eines Referenz-AGR-Raten-Kennfelds zu berechnen,
eine Schutz-AGR-Rate basierend auf der Drehzahl, der Last und einem Zündzeitpunktverzögerungsbetrag des Verbrennungsmotors (3) unter Verwendung eines Schutz-AGR-Raten-Kennfelds zu berechnen, und
wenn die Referenz-AGR-Rate höher als die Schutz-AGR-Rate ist, die AGR-Steuerung durch Verwendung der Referenz-AGR-Rate als Soll-AGR-Rückführungsrate auszuführen.

2. Verbrennungsmotorantriebssteuerungsvorrichtung gemäß Anspruch 1, wobei
das elektronische Steuergerät (4) ferner dazu ausgelegt ist,
eine maximal zulässige AGR-Rate für eine stabile Verbrennung als Maximalwert der AGR-Rate zu berechnen, bei der eine stabile Verbrennung im Verbrennungsmotor (3) basierend auf der Drehzahl und des Ladewirkungsgrades des Verbrennungsmotors (3) unter Verwendung eines Kennfelds für die maximal zulässige AGR-Rate für eine stabile Verbrennung sichergestellt werden kann, und
wenn die Referenz-AGR-Rate nicht höher als die Schutz-AGR-Rate ist und wenn die Schutz-AGR-Rate unter der maximal zulässigen AGR-Rate für eine stabile Verbrennung liegt, die AGR-Steuerung durch Verwendung der Schutz-AGR-Rate als Soll-AGR-Rückführungsrate auszuführen.

3. Verbrennungsmotorantriebssteuerungsvorrichtung gemäß Anspruch 2, wobei, wenn die Referenz-AGR-Rate nicht höher als die Schutz-AGR-Rate ist und wenn die maximal zulässige AGR-Rate für eine stabile Verbrennung nicht höher als die Schutz-AGR-Rate ist, das elektronische Steuergerät (4) ferner dazu ausgelegt ist, die AGR-Steuerung durch Verwendung der maximal zulässigen AGR-Rate für eine stabile Verbrennung als Soll-AGR-Rückführungsrate auszuführen.

4. Verbrennungsmotorantriebssteuerungsverfahren, das ein Abgasrückführungssystem (101) aufweist, das einen Teil des Abgases eines Verbrennungsmotors (3) an eine Ansaugseite des Verbrennungsmotors (3) zurückführt, wobei das Verbrennungsmotorantriebssteuerungsverfahren umfasst:
einen ersten Schritt des Berechnens einer Referenz-AGR-Rate basierend auf einer Drehzahl und einer Last des Verbrennungsmotors (3) unter Verwendung eines Referenz-AGR-Rate-Kennfelds;
einen zweiten Schritt des Berechnens einer Schutz-AGR-Rate basierend auf der Drehzahl, der Last und einem Zündzeitpunktverzögerungsbetrag des Verbrennungsmotors (3) unter Verwendung eines Schutz-AGR-Raten-Kennfelds; und
einen dritten Schritt des Bestimmens, ob die Referenz-AGR-Rate höher als die Schutz-AGR-Rate ist; und
wobei, wenn die Referenz-AGR-Rate höher als die Schutz-AGR-Rate ist, die Referenz-AGR-Rate als eine Soll-AGR-Rückführungsrate verwendet wird, während ein Betrieb des Abgasrückführungssystems (101) und ein Betrieb des Verbrennungsmotors (3) gesteuert wird.

## Revendications

1. Appareil de commande d'entraînement de moteur à combustion interne qui comprend un système de recirculation de gaz d'échappement (101) faisant recirculer une partie des gaz d'échappement d'un moteur à combustion interne (3) vers un côté d'admission du moteur à combustion interne (3) et dans lequel une unité de commande électronique (4) commande un fonctionnement du système de recirculation de gaz d'échappement (101) et un fonctionnement du moteur à combustion interne (3), dans lequel
l'unité de commande électronique (4) est conçue pour
calculer un taux de recirculation des gaz d'échappement, EGR, sur la base d'une vitesse et d'une charge du moteur à combustion interne (3) à l'aide d'une carte de taux d'EGR de référence,
calculer un taux d'EGR de protection sur la base de la vitesse, de la charge et d'une quantité de retard de calage de l'allumage du moteur à combustion interne (3) à l'aide d'une carte de taux d'EGR de protection, et
lorsque le taux d'EGR de référence est supérieur au taux d'EGR de protection, exécuter la commande d'EGR au moyen du taux d'EGR de référence comme taux d'EGR cible.

2. Appareil de commande d'entraînement de moteur à combustion interne selon la revendication 1, dans lequel
l'unité de commande électronique (4) est en outre conçue pour
calculer un taux d'EGR maximal autorisé de combustion stable comme valeur maximale du taux d'EGR à laquelle une combustion stable peut être assurée dans le moteur à combustion interne (3) sur la base de la vitesse et de l'efficacité de charge du moteur à combustion interne (3) à l'aide d'une carte de taux d'EGR maximal autorisé de combustion stable, et
lorsque le taux d'EGR de référence n'est pas supérieur au taux d'EGR de protection et lorsque le taux d'EGR de protection est inférieur au taux d'EGR maximal autorisé de combustion stable, exécuter la commande d'EGR au moyen du taux d'EGR de protection comme taux d'EGR cible.

3. Appareil de commande d'entraînement de moteur à combustion interne selon la revendication 2, dans lequel lorsque le taux d'EGR de référence n'est pas supérieur au taux d'EGR de protection et lorsque le taux d'EGR maximal autorisé de combustion stable n'est pas supérieur au taux d'EGR de protection, l'unité de commande électronique (4) est en outre conçue pour exécuter la commande d'EGR au moyen du taux d'EGR maximal autorisé de combustion stable comme taux d'EGR cible.

4. Procédé de commande d'entraînement de moteur à combustion interne comprenant un système de recirculation de gaz d'échappement (101) faisant recirculer une partie des gaz d'échappement d'un moteur à combustion interne (3) vers un côté d'admission du moteur à combustion interne (3), le procédé de commande d'entraînement de moteur à combustion interne comprenant :
une première étape de calcul d'un taux d'EGR de référence sur la base d'une vitesse et d'une charge du moteur à combustion interne (3) à l'aide d'une carte de taux d'EGR de référence,
une deuxième étape de calcul d'un taux d'EGR de protection sur la base de la vitesse, de la charge et d'une quantité de retard de calage de l'allumage du moteur à combustion interne (3) à l'aide d'une carte de taux d'EGR de protection, et
une troisième étape de détermination du fait que le taux d'EGR de référence est ou n'est pas supérieur au taux d'EGR de protection ;
dans lequel, lorsque le taux d'EGR de référence est supérieur au taux d'EGR de protection, le taux d'EGR de référence est utilisé comme taux d'EGR cible pendant la commande d'un fonctionnement du système de recirculation des gaz d'échappement (101) et d'un fonctionnement du moteur à combustion interne (3).
